# EUROPEAN PATENT APPLICATION

(11) **EP 3 705 761 A1**
(43) Date of publication of application: **09.09.2020**
(21) Application number: 19835223.9
(22) Date of filing: 08.05.2019
(51) Int. Cl.: F16K 7/12, F16K 27/02

(54) **PLASTIC VALVE**

(30) Priority: 23.01.2019 KR 20190008671; 07.05.2019 KR 20190053040
(71) Applicant: Lee, Sang Seon, Wonju-si Gangwon-do 26386 (KR)
(72) Inventor: Lee, Sang Seon, Wonju-si Gangwon-do 26386 (KR)
(74) Representative: Botti, Mario
(86) International application number: PCT/KR2019/005452
(87) International publication number: WO 2020/153530

(57) **Abstract**

A plastic valve is disclosed. The valve includes a body where a fluid flow space is formed, a fluid flowing through the fluid flow space, and an opening-closing member configured to open or close a hole formed on the body. Here, the opening-closing member has a step shape, a part of the opening-closing member blocks the hole when the valve is closed, and a part of the opening-closing member with the step shape rises when the valve is opened.

## Description

### TECHNICAL FIELD

The present disclosure relates to a plastic valve.

### BACKGROUND ART

A valve opens/closes flow of fluid and controls flow of the fluid by using a diaphragm or a ball.

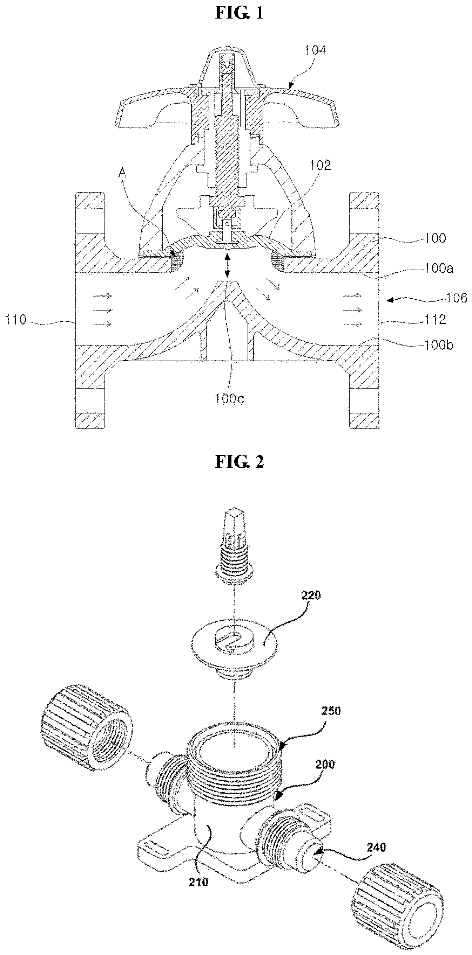

FIG. 1 is a view illustrating conventional valve.

In FIG. 1, the valve includes a main body 100, a diaphragm 102 and a manipulation member 104 for controlling the diaphragm 102.

A fluid flow space 106 is formed in the main body 100, and fluid inputted through an inlet 110 of the fluid flow space 106 is outputted through an outlet 112.

A body of conventional valve used for a semiconductor manufacture process gets damaged according as fluid which is chemical substance having strong toxicity remains in the body. Damage of the body may be prevented when fluid remained in the body is minimized after the fluid is flowed, in the event that the fluid which is chemical substance having strong toxicity flows.

### SUMMARY

To solve problem of the convention technique, the invention is to provide a plastic valve and an opening-closing member used in the valve.

The invention is to provide a plastic valve capable of minimizing remained fluid in a body after fluid is transferred and an opening-closing member used in the valve.

The invention is to provide a plastic valve for preventing damage of the body by minimizing remained fluid, which is chemical substance having strong toxicity, in the body to extend lifetime of the valve and an opening-closing member used in the valve.

The invention is to provide a plastic valve for preventing vortex occurrence at a corner in the body and an opening-closing member used in the valve.

The invention is to provide a plastic valve capable of increasing amount of fluid by two times compared to conventional valve via enhancement of stroke of an opening-closing member and the opening-closing member used in the valve.

In one aspect, a plastic valve and an opening-closing member used in the same are provided.

A valve according to one embodiment of the invention includes a body where a fluid flow space is formed, a fluid flowing through the fluid flow space; and an opening-closing member configured to open or close a hole formed on the body. Here, the opening-closing member has a step shape, a part of the opening-closing member blocks the hole when the valve is closed, and a part of the opening-closing member with the step shape rises when the valve is opened.

The fluid flow space includes a first fluid flow space through which the fluid is inputted in the body and a second fluid flow space through which the fluid is outputted, and the fluid flow spaces are connected through a hole of the body, and wherein the fluid flows through the first fluid flow space, the hole and the second fluid flow space.

A part of an inner surface of the body adjacent to the hole has a curved shape to prevent vortex.

A first pipe combination member is combined with one end part of the body, a second pipe combination member is combined with another end part of the body, a first pipe is inserted into the first pipe combination member, and a second pipe is inserted into the second pipe combination member, and wherein an inner diameter of the first pipe is identical to an inner diameter of the body when the first pipe is combined with the body by the first pipe combination member, and an inner diameter of the second pipe is identical to the inner diameter of the body when the second pipe is combined with the body by the second pipe combination member.

The valve further includes a fluid path changing member formed in the body and configured to change a moving direction of the fluid. Here, the first fluid flow space and the second fluid flow space are connected through a hole of the body by the fluid path changing member.

The fluid path changing member includes a wall for blocking flow of the fluid, and wherein a part of the wall connected to a lower part of one of the first fluid flow space and the second fluid flow space has a curved shape.

The opening-closing member includes a fixing member fixed to an upper part of the body; a transform member configured to have the step shape, one end part of the transform member being connected to the fixing member and the transform member being transformed depending on opening and closing of the valve; and a covering member connected to the other end part of the transform member and configured to contact with a hole formed on an upper part of the fluid path changing member.

The covering member blocks the hole of the body to block flow of the fluid according as the transform member having the step shape goes down in the hole of the body when the valve is closed, and the transform member rises in the hole of the body when the valve is opened.

The transform member is formed of polytetrafluoroethylene PTFE.

In an opening-closing member formed on a body of a plastic valve according to another embodiment of the invention, the opening-closing member has a step shape, a part of the opening-closing member blocks the hole when the valve is closed, and a part of the opening-closing member with the step shape rises when the valve is opened.

The opening-closing member includes a fixing member fixed to an upper part of the body; a transform member configured to have the step shape, one end part of the transform member being connected to the fixing member and the transform member being transformed depending on opening and closing of the valve; and a covering member connected to the other end part of the transform member, configured to block a hole of the body through transforming of the transform member when the valve is closed so that the fluid is not transferred to an outlet of the body and rise when the valve is opened.

A plastic valve of the invention prevents damage of a body by minimizing remained fluid, which is chemical substance having strong toxicity, in the body, and so lifetime of the plastic valve may be extended.

Additionally, vortex may not occur at a corner in the body.

Moreover, the valve may increase amount of fluid by two times compared to conventional valve via enhancement of stroke of an opening-closing member.

### BRIEF DESCRIPTION OF DRAWINGS

Example embodiments of the present invention will become more apparent by describing in detail example embodiments of the present invention with reference to the accompanying drawings, in which:
FIG. 1 is a view illustrating conventional valve;
FIG 2 is a perspective view illustrating schematically a valve according to a first embodiment of the invention;
FIG 3 is a sectional view illustrating the valve according to the first embodiment;
FIG 4 is a view illustrating section of a valve closed by an opening-closing member according to the first embodiment;
FIG 5 is a view illustrating fluid flow according to one embodiment of the invention; and
FIG 6 is a view illustrating an opening-closing member according to one embodiment of the invention.

### DETAILED DESCRIPTION

Example embodiments of the present invention are disclosed herein. However, specific structural and functional details disclosed herein are merely representative for purposes of describing example embodiments of the present invention, however, example embodiments of the present invention may be embodied in many alternate forms and should not be construed as limited to example embodiments of the present invention set forth herein.

It will be understood that, although the terms first, second, etc. may be used herein to describe various elements, these elements should not be limited by these terms. These terms are only used to distinguish one element from another.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Hereinafter, embodiments of the invention will be described in detail with reference to accompanying drawings.

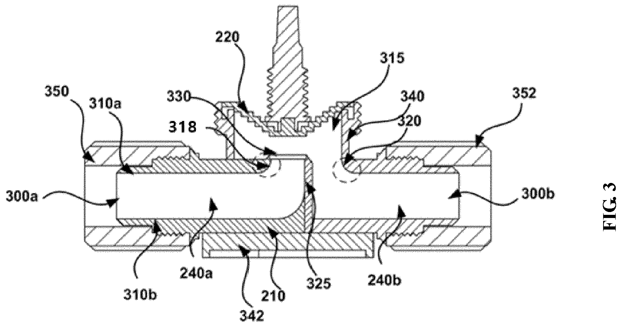

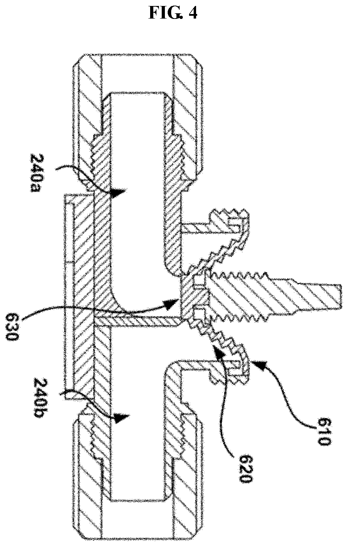

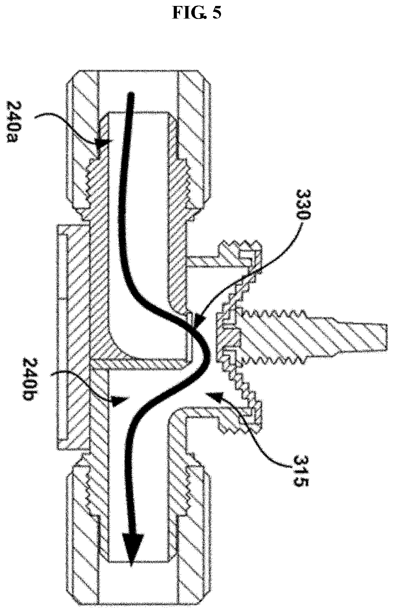

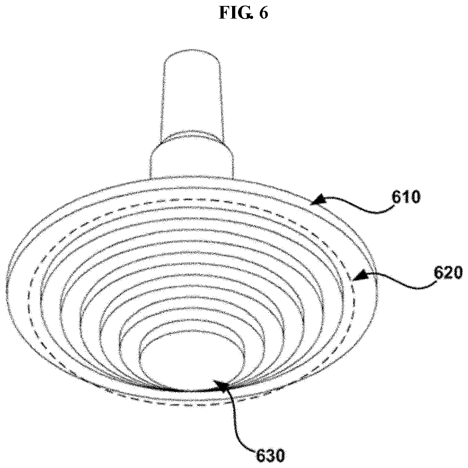

FIG. 2 is a perspective view illustrating schematically a valve according to a first embodiment of the invention, FIG. 3 is a sectional view illustrating the valve according to the first embodiment, and FIG. 4 is a view illustrating section of a valve closed by an opening-closing member according to the first embodiment. FIG. 5 is a view illustrating fluid flow according to one embodiment of the invention, and FIG. 6 is a view illustrating an opening-closing member according to one embodiment of the invention.

In FIG. 2, a valve of the present embodiment includes a body 210 and an opening-closing member 220.

Holes may be formed on lateral ends of the body 210, and a fixing member 350 or 352 may connect the valve to a pipe through the hole. That is, a first pipe combination member may be combined with one end part of the body 210, and a second pipe may be combined with another end part of the body 210. A first pipe may be inserted into the first pipe combination member 350, and a second pipe may be inserted into the second pipe combination member 352. The first pipe and the second pipe may be combined with the first pipe combination member 350 and the second pipe combination member 352 so that an inner diameter of the first pipe and the second pipe and an inner diameter of the body 210 do not have step difference, when the first pipe and the second pipe are inserted into the first pipe combination member 350 and the second pipe combination member 352. As a result, it may be designed that the inner diameter of the first pipe is identical to that of the body 210 when the first pipe is combined with the body 210 by the first pipe combination member 350. Furthermore, it may be designed that the inner diameter of the second pipe is identical to that of the body 210 when the second pipe is combined with the body 210 by the second pipe combination member 352.

A hole (hereinafter, referred to as a fluid flow space) 240a or 240b for fluid flow is formed in the body 210.

In one embodiment, the body 210 may be formed of a fluorine resin. The fluorine resin means every resin including fluorine in a molecule, and it includes a Polytetrafluoroethylene, PTFE, a Polychlorotrifluoroethylene PCTFE or a Perfluoroalkoxy alkane PFA, etc. This fluorine resin has excellent heat resistance, excellent chemical resistance, excellent electric insulation, small friction coefficient, and does not have adhesion. That is, velocity change of flow due to a laminar flow in the fluid flow space 240a or 240b may be minimized because the friction coefficient of the body 210 is small, when the body 210 is formed of fluorine resin.

In FIG. 3, an inner surface of the body 210 includes an inner upper surface 310a and an inner lower surface 310b. A hole 315, through which a part of the opening-closing member 220 moves up and down, is formed on an upper part of the body 210.

At least partial of internal surfaces of the body 210 has a curved shape. That is, the internal surfaces of the body 210 may not include an obstacle (for example, a squared part, etc.) of interrupting fluid flow.

Particularly, parts 320 near to the opening-closing member 220 of the inner upper surfaces of the body 210, i.e. adjacent to the hole 315 may have the curved shape. Here, curved parts may be inclined toward the opening-closing member 220.

The fluid flow space 240a or 240b corresponding to the inner surface of the body 210 is a means for transferring the fluid. The fluid may be inputted through an inlet 300a of the fluid flow space 240a and the fluid of the fluid flow space 240a or 240b may be outputted through an outlet 300b of the fluid flow space 240b.

As shown in FIG. 2, the fluid flow space may include a left fluid flow space 240a connected to the inlet 300a and a right fluid flow space 240b connected to the outlet 300b. The left fluid flow space 240a and the right fluid flow space 240b are connected through the hole 315 formed on an upper part of the body 210. Accordingly, the fluid inputted through the inlet 300a is flowed through the left fluid flow space 240a and then is transferred to the right fluid flow space 240b through the hole 315 formed on the upper part of the body 210, and the transferred fluid flows through the right fluid flow space 240b and then is outputted through the outlet 300b.

The fluid flow space 240a and 240b may have a shape not to have an obstacle for hindering flow of the fluid therein.

In view of the fluid flow, the fluid is inputted in the body 210 through the inlet 300a and the fluid inputted through the inlet 300a flows through the left fluid flow space 240a. In this time, a flow direction of the fluid is changed by a wall (i.e. fluid path changing member) in the body 210, and so the fluid is transferred to the hole 315 formed on the body 210. The transferred fluid flows to the right fluid flow space 240b, and the flowed fluid flows through the right fluid flow space 240b and then is outputted through the outlet 300b.

The fluid path changing member 325 for changing the flow direction of the fluid is formed in the fluid flow space 240. The left fluid flow space 240a is not directly connected to the right fluid flow space 240b by the wall which is the fluid path changing member 325. The wall of the fluid path changing member 325 is connected to an inner lower surface of inner surfaces of the body 210 and is extended in a direction to the hole 315 formed on the body 210.

A hole (referred to as "fluid path changing hole") connected to the left fluid flow space 240a is formed on an upper surface of the fluid path changing member 325. The fluid transferred from the left fluid flow space 240a through the fluid path changing hole 330 may be transferred to the hole 315 of the body 210. That is, the fluid inputted through the left fluid flow space 240a flows to the hole 315 of the body 210 by the fluid path changing member 325 and then is transferred to the right fluid flow space 240b through the hole 315 of the body 210.

The left fluid flow space 240a is connected to the body 210 through the fluid path changing hole 330 formed on the upper surface of the fluid path changing member 325.

The right fluid flow space 240b is not connected to the fluid path changing member 325. That is, the right fluid flow space 240b is connected to a part of the hole 315 formed on the body 210.

Briefly, the fluid flowing through the left fluid flow space 240a is transferred to the hole 315 of the body 210 through the fluid path changing member 325 and the fluid path changing hole 330, and the transferred fluid flows to the outlet 300b through the right fluid flow space 240b connected to a part of the hole 315 of the body 210.

The fluid path changing hole 330, of which one side is connected through the upper surface of the fluid path changing member 325, may have a curved shape without squared part. An upper part of the fluid path changing member 325 may have a convex shape from a part (for example, a lower part) of the hole 315 of the body 210. As a result, the fluid inputted through the fluid path changing hole 330 may be transferred to the right fluid flow space 240b via a part of the hole 315 of the body 210. Additionally, a part connected from an upper part of the fluid path changing member 325 to the fluid flow space 240 may have a curved shape without a squared part. A hole formed on an upper surface of the fluid path changing member 325 may be completely closed by the opening-closing member 220 so that the fluid is not flowed.

A part of the fluid flow space adjacent to the fluid path changing hole 330 may not have the squared part. That is, a lower surface corresponding to an input part of the fluid path changing hole 330 may have a curved shape unlike a lower part of the left fluid flow space 240a. However, a lower surface corresponding to an output part of the fluid path changing member 325 may not have a curved shape.

Briefly, corner parts 318 and 320 of the body 210 adjacent to the fluid path changing member 325 have the curved shape, and thus vortex may not occur to the corner parts of the body 210. If the corner parts 318 and 320 have a squared shape, the fluid collides with a squared part when the fluid flows. That is, the squared part operates as an obstacle for hindering fluid flow, and thus vortex occurs to the squared part. As a result, the fluid may not be smoothly transferred due to the occurred vortex. Accordingly, in the invention, the corner parts 318 and 320 have the curved shape, and so the fluid flows smoothly along the corner parts 318 and 320 without being collided with the corner parts 318 and 320. That is, the corner parts 318 and 320 do not operate as the obstacle for hindering fluid flow, and thus the fluid may flow smoothly. A transfer amount of the fluid when the corner parts 318 and 320 have the curved shape is considerably higher than that of the fluid when the corner parts 318 and 320 have the squared shape.

In the event that the corner parts 318 and 320 have the squared shape, size of the valve should be increased if it wants to augment the transfer amount of the fluid. However, increase of the size of the valve gives rise to cost of the valve and requires changing of every peripheral device related to the valve, and thus cost of a system increases sharply.

The valve may transfer adequate amount of the fluid though the size of the valve is not increased, when the corner parts 318 and 320 have the curved shape. Accordingly, cost of the system may not be augmented.

In view of advantage when the fluid path changing member 325 is included in the fluid flow space 240, the plastic valve may minimize amount of fluid remained in the valve after transferring of the fluid having strong toxicity is completed. Fluid using for manufacture of a semiconductor or an LCD has very strong toxicity, and the fluid may go bad when the fluid remains in the body 210, thereby damaging an inner part of the body 210. Accordingly, the invention forms the fluid path changing member 325 in the body 210 to minimize remained fluid having strong toxicity in the body 210. As a result, the fluid remained in the body 210 after the transferring of the fluid is completed may be minimized.

Shortly, one side of the fluid path changing member 325 is directly contacted with the body 210 and is connected to the fluid flow space 240a, and an upper part of the other side of the fluid path changing member 325 is not directly contacted with the body 210. That is, a lower part of the other side of the fluid path changing member 325 is contacted with the right fluid flow space 240b, and the upper part of the other side of the fluid path changing member 325 is separated from the right fluid flow space 240b and is not contacted with the body 210. Additionally, a wall of the fluid path changing member 325 may have height corresponding to a part of an opening-closing supporting member 340.

The fluid inputted through the inlet of the fluid flow space 240 may flow through the left fluid flow space 240a and then be transferred to the right fluid flow space 240b through the fluid path changing hole 330 and the hole 315 of the body 210, and the transferred fluid may be outputted through the outlet of the right fluid flow space 240b.

Flow of the fluid may be controlled by up and down moving of the opening-closing member 220 according as the upper part of the fluid path changing member 325 locates on a lower part of the hole 315 of the body 210. That is, much fluid is transferred because space of the hole 315 of the body 210 is wide when the opening-closing member 220 is wholly opened, and amount of the fluid to be transferred goes down because the space of the hole 315 is relatively small according as the opening-closing member 220 moves downwardly in the hole 315 of the body 210.

A diameter of the fluid path changing hole 330 may be identical to that of the fluid flow space 240a or 240b. As a result, occurrence of vortex and fluid flow problem due to diameter difference of the fluid path changing hole 330 and the fluid flow space 240a or 240b may reduce.

The opening-closing member 220 opens or closes flow of the fluid in the fluid flow space 240a and 240b and may locate on the main body 200 or the body 210. The opening-closing member 220 may have a structure shown in FIG. 3 when the fluid flows through the fluid flow space 240a or 240b, and it may contact with the upper part of the fluid path changing member 325 as shown in FIG. 4 when the flow of the fluid is closed in the fluid flow space 240a or 240b. As a result, the fluid inputted through the inlet 300a is not transferred to the right fluid flow space 240b as the flow of the fluid is closed by the opening-closing member 220 contacted with the fluid path changing member 325.

A part of the opening-closing member 220 has a step shape. The opening-closing member 220 closes the hole formed on the upper part of the body 210 when the valve is closed, and the part of the opening-closing member 220 having the step shape rises when the valve is opened.

A stroke of the opening-closing member 220 increases when the opening-closing member 220 rises or goes down in response to opening/closing of the valve because the part of the opening-closing member 220 has the step shape.

The opening-closing member 220 may be a diaphragm or a ball. The opening-closing member 220 is the diaphragm in drawings, but it is not limited as the diaphragm.

The opening-closing member 220 has a circular shape in FIG. 6, but a shape of the opening-closing member 220 is not limited as the circular shape. The opening-closing member 220 may have various shapes depending on a shape of the hole of the body 210.

The opening-closing member 220 may be formed of one of engineering plastics which is one of fluorine resin. For example, the opening-closing member 220 may be formed of Polytetrafluoroethylene PTFE.

A manipulation member controls opening/closing operation of the opening-closing member 220, for example it may control the opening-closing member 220 so that the opening-closing member 220 contacts with or does not contact with the upper part of the fluid path changing member 325 through the hole 315 of the body 210.

Hereinafter, detailed structure of the opening-closing member 220 will be described with reference to a drawing FIG. 6.

In FIG. 6, the opening-closing member 220 of the present embodiment includes a fixing member 610, a transform member 620 and a covering member 630.

The fixing member 610 fixes the opening-closing member 220. The fixing member 610 may be fixed to a groove formed on an upper part of the main body. As a result, the opening-closing member 220 may prevent the fluid having strong toxicity from being out flowed through the hole formed on the main body after passing through the fluid flow space. The fixing member 610 can keep combining the opening-closing member 220 with a part of the main body though the opening-closing member 220 rises or goes down by control of the manipulation member combined with a connection member connected to an upper part of the opening-closing member 220.

Accordingly, the fixing member 610 may prevent the opening-closing member 220 from being separated from the main body when the valve is closed, so that the fluid which is a toxic material is not out flowed through the upper part of the main body. The fixing member 610 may not be transformed though a part of the opening-closing member 220 is transformed with elasticity.

The fixing member 610 may be formed along an outer circumference of the opening-closing member 220.

One end part of the transform member 620 is connected to the fixing member 610 and the other end part of the transform member 620 is connected to the covering member 630. The transform member 620 has the step shape. The transform member 620 has the step shape in FIG. 3 to FIG. 6, but a shape of the transform member 620 is not limited as the step shape.

The transform member 620 goes down into the hole 315 formed on the upper part of the body 210 when the valve is closed and rises when the valve is opened.

The transform member 620 may have the step shape with constant step difference. The stroke of the opening-closing member 220 may increase when the valve is closed because the transform member 620 has the step shape.

The opening-closing member 220 has elasticity depending on transforming of the transform member 620, and the covering member 630 may go down according to the transform member 620 is extended. Accordingly, the covering member 630 closes the hole formed on the upper part of the fluid path changing member 325, thereby blocking flow of the fluid.

It is desirable that the transform member 620 has thickness of 1mm or less to have high stroke when the valve is closed.

The transform member 620 has the step shape in above description, but the shape of the transform member 620 is not limited as the step shape. The stroke of the transform member 620 may increase considerably according as the transform member 620 has the step shape. However, the shape of the transform member 620 is not limited as the step shape as long as the transform member 620 has elasticity to be shrunk and relaxed.

The opening-closing member 220 may not only close the valve but also use transforming of the transform member 620 to adjust a transfer amount of the fluid, according as the transform member 620 is transformed to be moved up and down.

The covering member 630 is connected to the other end part of the transform member 620. The covering member 630 may have a flat surface.

The covering member 630 may have a size capable of blocking the hole formed on the fluid path changing member 325 to block the flow of the fluid. The connection member is combined with an upper surface of the covering member 630. The connection member delivers a force in accordance with control of the manipulation member to the covering member 630, and thus the covering member 630 goes down. As a result, the transform member 620 connected along an outer circumference of the covering member 630 is transformed as the covering member 630 goes down.

In brief, the opening-closing member 220 includes the covering member 630 formed with constant diameter based on a central part of the opening-closing member 220, the transform member 620 connected along the outer circumference of the covering member 630 and the fixing member formed along the outer circumference of the transform member 620.

In the event that the valve is closed, the fixing member 610 and the covering member 630 are not transformed, and the transform member 620 located between the fixing member 610 and the covering member 630 may be transformed according as the covering member 630 goes down by the force applied to the covering member 630 via the connection member. Degree of the covering member 630 downed in the hole formed on the upper part of the body 210 may be determined by a force to applied to the connection member through the manipulation member, and the transfer amount of the fluid may be adjusted depending on the degree.

A space between the fluid path changing hole 330 and an opening-closing member is small when the valve is opened because the opening-closing member has very small elasticity, if the opening-closing member does not have the step shape but is flat. Accordingly, a transfer amount of the fluid is small.

A space between the fluid path changing hole 330 and the opening-closing member 220 increases when the valve is opened because elasticity of the opening-closing member 220 gets higher, if the opening-closing member 220 has the step shape. As a result, much amount of the fluid may be transferred. That is, more amount of the fluid may be transferred through the valve during the same time of period.

The embodiments of the invention described above are disclosed only for illustrative purposes. A person having ordinary skill in the art would be able to make various modifications, alterations, and additions without departing from the spirit and scope of the invention, but it is to be appreciated that such modifications, alterations, and additions are encompassed by the scope of claims set forth below.

## Claims

1. A valve comprising:
a body where a fluid flow space is formed, a fluid flowing through the fluid flow space; and
an opening-closing member configured to open or close a hole formed on the body,
wherein the opening-closing member has a step shape, a part of the opening-closing member blocks the hole when the valve is closed, and a part of the opening-closing member with the step shape rises when the valve is opened.

2. The valve of claim 1, wherein the fluid flow space includes a first fluid flow space through which the fluid is inputted in the body and a second fluid flow space through which the fluid is outputted, and the fluid flow spaces are connected through a hole of the body,
and wherein the fluid flows through the first fluid flow space, the hole and the second fluid flow space.

3. The valve of claim 1, wherein a part of an inner surface of the body adjacent to the hole has a curved shape to prevent vortex.

4. The valve of claim 1, wherein a first pipe combination member is combined with one end part of the body, a second pipe combination member is combined with another end part of the body,
a first pipe is inserted into the first pipe combination member, and a second pipe is inserted into the second pipe combination member,
and wherein an inner diameter of the first pipe is identical to an inner diameter of the body when the first pipe is combined with the body by the first pipe combination member, and an inner diameter of the second pipe is identical to the inner diameter of the body when the second pipe is combined with the body by the second pipe combination member.

5. The valve of claim 2, further comprising:
a fluid path changing member formed in the body and configured to change a moving direction of the fluid,
wherein the first fluid flow space and the second fluid flow space are connected through a hole of the body by the fluid path changing member.

6. The valve of claim 5, wherein the fluid path changing member includes a wall for blocking flow of the fluid,
and wherein a part of the wall connected to a lower part of one of the first fluid flow space and the second fluid flow space has a curved shape.

7. The valve of claim 1, wherein the opening-closing member includes:
a fixing member fixed to an upper part of the body;
a transform member configured to have the step shape, one end part of the transform member being connected to the fixing member and the transform member being transformed depending on opening and closing of the valve; and
a covering member connected to the other end part of the transform member and configured to contact with a hole formed on an upper part of the fluid path changing member.

8. The valve of claim 7, wherein the covering member blocks the hole of the body to block flow of the fluid according as the transform member having the step shape goes down in the hole of the body when the valve is closed, and the transform member rises in the hole of the body when the valve is opened.

9. The valve of claim 1, wherein the transform member is formed of polytetrafluoroethylene PTFE.

10. An opening-closing member formed on a body of a plastic valve, wherein the opening-closing member has a step shape, a part of the opening-closing member blocks the hole when the valve is closed, and a part of the opening-closing member with the step shape rises when the valve is opened.

11. The opening-closing member of claim 10, wherein the opening-closing member includes:
a fixing member fixed to an upper part of the body;
a transform member configured to have the step shape, one end part of the transform member being connected to the fixing member and the transform member being transformed depending on opening and closing of the valve; and
a covering member connected to the other end part of the transform member, configured to block a hole of the body through transforming of the transform member when the valve is closed so that the fluid is not transferred to an outlet of the body and rise when the valve is opened.
